# EUROPEAN PATENT APPLICATION

(11) **EP 0 599 482 A2**
(43) Date of publication of application: **01.06.1994**
(21) Application number: 93308462.6
(22) Date of filing: 22.10.1993
(51) Int. Cl.: B41F 33/00

(54) **A method of evaluating print quality on a substrate**

(30) Priority: 27.11.1992 US 982564
(71) Applicant: MOORE BUSINESS FORMS, INC., Grand Island New York 14072-1697 (US)
(72) Inventor: Orrin, D. Christy, North Tonawanda, New York 14120 (US)
(74) Representative: Spence, Anne

(57) **Abstract**

The print quality of printing on a substrate (15) (such as a business form in a moving web configuration) is determined by imaging a small L-shaped border element (16, 31, 33) in an unobtrusive area of the substrate which is indicative of the image quality of the print engine which effects the imaging. Using a high resolution electronic camera (19) and a stroboscopic light (18), electronic data about the border element is fed to a computer (12), which electronically analyzes it for print quality, including measured width, stroke reflectance/background reflectance (which can yield optical density), edge density, edge roughness, solid character fill, and background dusting in non-print areas. The print engine (11) may then be controlled in response to the quality determination. Coded information, and grid (33), may be printed within the area defined by the L-shaped border element, and the information may be obtained by scanning at another location (26).

## Description

### BACKGROUND AND SUMMARY OF THE INVENTION

There are many circumstances in which it is highly desirable to ensure that electronic imaging being effected by a print engine (such as a MIDAX ion deposition print engine) is in alignment and registration, and has acceptable quality. This is particularly true in the production of business forms in continuous web configuration. Also, there are numerous situations -- especially in the production of business forms -- where it is desirable to give a coded identification mark to each individual form (or other web component) in order to ensure proper matching and production of documents. For example some uses of the coded identification marking are security document printing and verification with a coded serial number, lottery ticket security, data integrity for critical business form constructions, cards for matched mailing piece matching and verification, data integrity and verification of billings in service bureau type jobs and business forms, and data gathering on return documents by scanning of incoming pieces.

While the above-mentioned goals are highly desirable, they must be attained in a manner that does not intrude upon the aesthetics or functionality of the substrates being printed (such as business forms). That is, data applied to the business forms as part of the functional aspects of the document is typically unsatisfactory for reading to obtain desired alignment, registration or print (image) quality information, and data printed specially may not have sufficient information or other characteristics to allow it to function as desired.

According to the present invention, a method of determining alignment and print quality of printed substrates, and also allowing for coded identification of the substrates, is provided which can achieve its desired results in a simple and effective manner, and does not in any way hamper or intrude upon the functionality or aesthetics of the substrate being printed. The invention also may be advantageously implemented with commercially available equipment.

According to one aspect of the present invention a method of evaluating the print quality on a substrate (such as a web of continuous paper business forms) is provided. The method comprises the following steps: (a) Printing a small, unobtrusive two dimensional element on an unobtrusive portion of the substrate with a print engine. (b) Optically scanning the substrate two dimensional element to obtain electronic data about the quality of the print of the element. And, (c) electronically comparing the electronic data obtained to acceptable standards of a plurality of different aspects of print quality to determine print quality. Also, there is preferably the further step (d) of controlling the print engine -- in response to step (c) -- to automatically adjust the print quality of the element so that it is within acceptable standards, forming an electronic feedback loop which controls printing engine functions.

In the practice of the method described above, steps (b) and (c) are typically practiced to obtain data with respect to, and compare with respect to acceptability standards regarding, measured width, stroke reflectance/background reflectance, edge density gradient, edge roughness, solid character fill, and background dusting in non-print areas. Typically step (a) is practiced by printing an L-shape border element. This facilitates the determination of alignment and imaged registration of the printing by the print engine, by analyzing the alignment and registration of the L-shaped element. Step (a) may be further practiced by printing coded information within a two dimensional area (e.g. grid) defined by the L-shaped border element.

Where the substrate comprises a continuously moving web, step (b) may be practiced immediately downstream of the print engine in the direction of web movement. Step (b) may be practiced by exposing a light for a few microseconds (e.g. a strobe light) on the printed element, and viewing the lighted element with a high resolution electronic camera. Any coded information printed within the two dimensional area may be optically scanned, for example at a location distinct from the optical scanning of step (b).

Typically the L-shaped element that is printed comprises a 7 x 7 array of squares with a side dimension of about 0.106 inches (this compares to the diameter of a line hole punch in computer paper which is typically more than 0.125 inches). The array of grid squares can support about 5.6 X 10¹⁴ combinations of numbers in an uncompressed manner, which can be coded into the area defined by the L.

According to another aspect of the present invention, a method of evaluating an imaged substrate is provided comprising the following steps: (a) With a print engine, electronically imaging (e.g. printing) a small, unobtrusive L-shaped border area indicative of the image (e.g. print) quality of the print engine on the substrate, and imaging coded information within an area defined by the L-shaped border area. (b) Optically scanning the L-shaped border area to obtain electronic data. And, (c), electronically evaluating the electronic data to determine print quality and desired coded information.

Step (a) is practiced by printing a grid within the area defined by the L-shaped border element, and there may be the further step of determining the alignment and registration of the printing by electronically evaluating the electronic data obtained from optically scanning the L-shaped border area. Step (b) may be practiced at two different locations for print quality data and coded information.

According to still another aspect of the present invention there is provided a method of evaluating the print quality of an imaged (e.g. printed) substrate comprising the steps of: (a) With a print engine, electronically imaging an L-shaped, unobtrusive border element on the substrate, indicative of the print quality of the print engine. (b) Optically scanning the printed border element to obtain electronic data. And, (c) electronically comparing the electronic data to print standards regarding a plurality of indicators of print quality, including measured width, optical density, edge density, edge roughness, solid character fill, and background dusting in non-printed areas.

It is the primary object of the present invention to effectively provide for print quality and/or coded information recovery, and alignment and registration, of and from printed substrates in a simple, unobtrusive, yet effective manner. This and other objects of the invention will become clear from an inspection of the detailed description of the invention and from the appended claims.

### BRIEF DESCRIPTION OF THE DRAWINGS

FIGURE 1 is a schematic block diagram illustrating various pieces of apparatus, connected together in a system, that might be utilizable in the practice of the method according to the invention;
FIGURE 2 is a greatly enlarged view of an unobtrusive two dimensional element that is printed on a substrate in the practice of the present invention; and
FIGURE 3 is a high level flow chart illustrating an exemplary manner of effecting the method according to the present invention.

### DETAILED DESCRIPTION OF THE DRAWINGS

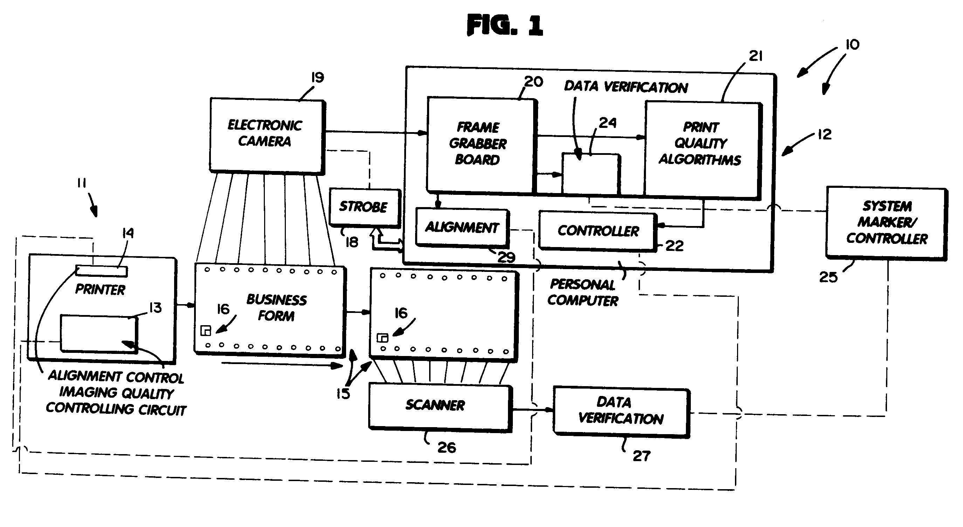

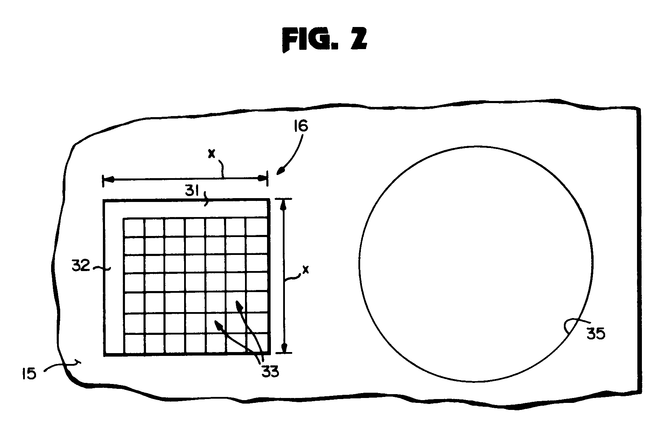

The apparatus illustrated in FIGURE 1, shown generally by reference numeral 10, comprises as the most basic components a print engine 11 and a PC or other like electronic controller 12. The printer 11 may comprise any conventional type of electronic print engine, such as a MIDAX ion deposition printer, which typically has image quality controlling circuitry 13, and alignment control circuitry 14 therein. The print engine 11 effects the electronic imaging on a substrate, which may have a configuration of a continuous web of business forms though not limited only to web forms in the strictly defined sense, illustrated schematically by reference numeral 15 in FIGURE 1. The print engine 11 prints a small unobtrusive two dimensional element, shown schematically by reference numeral 16 in FIGURE 1, and shown in greatly enlarged configuration in FIGURE 2 -- on an unobtrusive portion of the business form (substrate). Where the substrate 15 is a continuous web of business forms, typically the two dimensional element 16 will be printed on every business form (if coded information is to be included therewith), or on every several business forms (if print quality and/or alignment only are to be what the element 16 is utilized for).

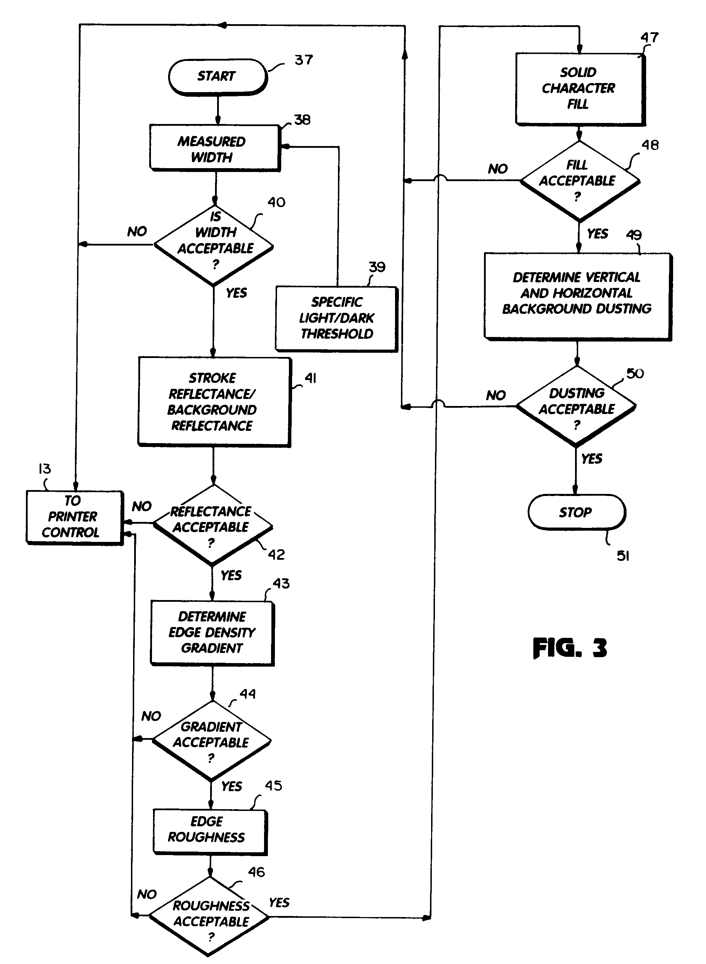

After imaging (e.g. printing) of the element 16 with the print engine 11, the substrate 15 is optically scanned, particularly the element 16 thereof, to obtain electronic data about the quality of the imaged (print) element 16. This electronic data is then electronically compared to acceptable standards for a plurality of different aspects of print quality in order to determine print quality. Optical scanning preferably may be accomplished utilizing a strobe light 18 and a high resolution electronic camera 19. Typically the substrate 15 is moving when a "snapshot" is taken of the element 16 with the stroboscopic light source 18 at an exposure of a few microseconds, by the camera 19. The strobe 18 and camera 19 are operatively connected to the PC 12, and the electronic data from the camera 19 is sent to a frame grabber board 20 within the PC 12, downloaded, and analyzed by conventional print quality algorithms indicated at 21, and described more fully with respect to FIGURE 3. Data from the print quality algorithms 21 effects operation of a controller 22, which is connected to the imaging quality controlling circuitry 13 of the print engine 11 and effects control of the print engine 11 in order to automatically adjust any print quality aspects that are not up to standard.

Where the element 16 also has coded information printed thereon, the electronic camera 19 determines that data, which is again fed to the frame grabber board 20, and downloaded to the data verification component 24, which is connected to a system marker/controller 25 to ensure that the proper forms 15 are being supplied in proper sequence for the particular job being processed (e.g. security document printing with coded serial numbers, lottery ticket security, etc.). Alternatively, or additionally, the data printed within the element 16 may be determined at a spaced, downstream location from the camera 19 by a secondary electronic camera or a conventional optical scanner 26, which operates through data verification element 27 to operate the system marker/controller 25.

Where an L-shaped print element 16 is printed (as seen in FIGURE 2), the element 16 also may be used for control of print alignment and imaging registration on the form. Again, data from electronic camera 19 is fed to the frame grabber board 20 and downloaded to alignment control element (e.g. software) 29 which is operatively connected to the alignment control circuitry 14 in the print engine 11, so that alignment and/or registration is automatically adjusted.

An exemplary print element 16 according to the invention, greatly enlarged, is illustrated in FIGURE 2. The element 16 preferably comprises solid print (toner) side edges 31, 32, which form an L-shape. The L-shape is important for alignment control, and is also important for evaluating background dusting in non-print areas. Preferably, a 7 x 7 grid arrangement, shown generally by reference numeral 33 in FIGURE 2, is printed within the two dimensional area defined by the L-shaped border elements 31, 32, so that the horizontal cross web stroke structure can be analyzed along with vertical structure, very important in determining background dusting for many print engines. Also, data may be printed within the grid 33 (a 7 x 7 array supporting about 5.6 x 10¹⁴ uncompressed number combinations), such as disclosed in principle in U.S. patents 4,939,354 and 4,924,078.

The element 16 imaged (printed) on a substrate 15 is in an unobtrusive area (does not interfere with any functional data printed on the form), and is also small and unobtrusive in size, for example the dimensions X illustrated in FIGURE 2 being about 0.106 inches. This compares to a conventional line hole punch 35 using the tractor feed for moving the substrate 15, which typically has a diameter of at least about 0.125 inches.

A high level flow sheet illustrating the practice of various print quality and like determinations according to the invention is illustrated in FIGURE 3. It should be understood that the flow sheet of FIGURE 3 is only one exemplary form that the design of software for cooperation and control of the components 11, 12, 19, etc. may take. The schematic of FIGURE 3 illustrates sequential evaluations of print quality components, but parallel evaluations may additionally or alternatively be made.

Once a periodic evaluation of print quality is enabled as illustrated at 37 in FIGURE 3, a measured width algorithm 38 evaluation is made. The measured width evaluation 38 is based upon a specific light-dark threshold, which is supplied as illustrated schematically at 39, and is predetermined and set into the software for the computer 12, and algorithms 21, depending upon the particular features of the substrate 15 and other variables. If the width is not acceptable, then a control signal is fed to the printer control circuitry 13, which automatically adjusts the width to the acceptable range.

Assuming a sequential operation, if the width is acceptable at 40, then the next print quality element is evaluated at 41, e.g. stroke reflectance/background reflectance. This element can yield printed optical density, print contrast signal, and like print quality parameters. If the reflectance is determined acceptable compared to pre-established standards at 42, then in a sequential system the next parameter is evaluated, e.g. the edge density gradient is determined at 43. If not, then the printer control circuitry 13 is enabled in order to adjust the stroke and/or background reflectance so that they are acceptable.

As illustrated in FIGURE 3, the edge density gradient is compared to applicable standards at 44, edge roughness (measured by actual optical density perimeter between two points on the edge of the strobe) is evaluated at 45 and compared to acceptable standards at 46, solid character fill is evaluated at 47 and compared to acceptable standards at 48, and background dusting in non-print areas is evaluated at 49 and compared to acceptable standards at 50. If all print quality elements match acceptable standards, then the control sequence is stopped at 51, and restarted at the next desirable time (e.g. when the next print element 16 appears on the moving web 15), or after a like periodic delay.

Immediate adjustment on each form is not desired. When print quality non-acceptability is noted, a series of measurements are stored in a buffer and filtered, so that individual measurements are smoothed out with other measurements.

When the electronic camera, 18, processes the image of the "L" shaped element of the microdot 16, the image is subsequently captured by the frame grabber board 20, and the subsequent bit image field is processed by print quality algorithms, 21, in the personal computer 12. These algorithms take on a multi purpose task: (a) Analyze the vertical and horizontal arms of the "L" shaped structure to measure the averaged printed stroke width over the big image pattern. (b) Analyze these same arms to determine the overall deviation or variance of the captured bit-image stroke width to determine the element's edge roughness or raggedness. (c) Analyze the big-image pattern print density to derive the overall average optical density of the toned image and edge density gradient. (d) Apply appropriate filtering time constants and the appropriate control delay parameters using simple feed back algorithms or more complex PID (proportional integral derivative) control loops, and send this massaged control signal to the controller 22.

From this point at the controller 22, the appropriate feedback signal or signals are fed back to the appropriate electrical or mechanical subsystem on the print engine 11 to bring print quality factors within the specified system control limits. As shown in FIGURE 1, the control is the contrast controlling circuit 14, which has its primary effect in changing the printed stroke width (or pixel spot size), with a lesser secondary effect of changing the printed optical density and a small effect on the printed line edge roughness. With multiple signals to other controlling subsystems on a MIDAX print engine 11, a larger influence can be obtained to adjust the printed optical density, edge density gradient, and printed line edge roughness. In normal operation, printed stroke width is the primary gauged parameter, so most of the feedback control is concentrated on it.

In any electrographic (MIDAX Ion Deposition) or electrophotographic (e.g. laser technology) printer 11, a certain amount of statistical variance is associated with the creation of each individual printed picture element (pixel). Since the scanning system of the invention captures the elements made up of individual pixels forming a line, and these pixels all carry a certain amount of variance in their size and structure, a certain amount of electrical filtering is needed before the feedback signal is presented to the print engine control subsystem (e.g. contrast control 14). This prevents the print engine 11 from making rapid uncontrolled swings in control parameters, possibly sending it into a non-controlled oscillation from thick strokes to thin, dark density to light, etc.

Control delays in the process are determined and set by two parameters. First is the imaging system process speed. Second is the physical distance on the substrate web between the printer 11 and the position where the electronic camera 19 actually captures the image of the "L" shape element. Typically process speeds from 250-400 feet/minute and printer to camera distances from 0.5-2.0 meters are utilized.

Typically for a MIDAX On-Line Scanner, single image processing time is in the neighborhood of 200 milliseconds. Running at 300 feet/minute process speed, it is found that the control chart is updated about once per second for best filtering of the bit-image data after 5 images are captured and processed. From this, the data is fed to a PID loop and the proper correction is made each second. As long as the process speed and printer to camera distance are within a reasonable range of the nominal values described, control delay parameters are insignificant. Possibly working with much slower process speed (e.g. <10 feet/minute), appropriate filtering constants and control delays would be needed.

It will thus be seen that according to the present invention utilizing conventional equipment, including print quality algorithms 21, a simple yet effective method of evaluating the print alignment and quality on a substrate, and/or evaluating the printed substrate for data, is provided. While the invention has been herein shown and described in what is presently conceived to be the most practical and preferred embodiment thereof it will be apparent to those of ordinary skill in the art that many modifications may be made thereof within the scope of the invention, which scope is to be accorded the broadest interpretation of the appended claims so as to encompass all equivalent methods and procedures.

## Claims

1. A method of evaluating the print quality on a substrate, comprising the steps of:
(a) imaging a small, unobtrusive two dimensional element on an unobtrusive portion of the substrate with a print engine;
(b) optically scanning the substrate two dimensional element to obtain electronic data about the quality of the print of the element; and
(c) electronically comparing the electronic data obtained to acceptable standards of plurality of different apsects of print quality to determine print quality.

2. A method as recited in claim 1 characterised by the further step (d) of controlling the print engine, in response to step (c), to adjust the print quality of the element so that it is within the acceptable standards.

3. A method as recited in claim 1 or claim 2 characterised in that steps (b) and (c) are practiced to obtain data with respect to, and compare with respect to acceptability standards regarding some or all of the following aspects of print quality: measured width, stroke reflectance/background reflectance, edge density gradient, edge roughness, solid character fill, and background dusting in non-print areas.

4. A method as recited in any of claims 1 to 3 characterised in that step (a) is practiced by printing an L-shaped border element, and comprising the further step of determining alignment and/or registration of the printing by the print engine by analyzing the alignment and/or registration of the L-shaped element.

5. A method as recited in claim 4 characterised in that step (a) is further practiced by imaging coded information within a two dimensional area defined by said L-shaped border element.

6. A method as recited in claim 4 or claim 5 characterised in that step (a) is further practiced by imaging a grid within the two dimensional area defined by said L-shaped border element.

7. A method as recited in any of claims 1 to 6 characterised in that the substrate comprises a continuously moving web, and wherein step (b) is practiced immediately downstream of the print engine in the direction of web movement.

8. A method as recited in any of claims 1 to 7 characterised in that the substrate is continuously moving during the practice of step (b), and wherein step (b) is practiced by exposing a light for a few microseconds on the printed element, and viewing the lighted element with a high resolution electronic camera.

9. A method as recited in any of claims 1 to 8 characterised in that the substrate is a continuous business form, and wherein steps (a)-(c) are practiced periodically.

10. A method as recited in any of claims 1 to 3 characterised in that step (a) is further practiced by printing an L-shaped border element, and coded information within a two dimensional area defined by the L-shaped border element and by the further step of optically scanning the coded information within the two dimensional area, preferably at a location distinct from the optical scanning of step (b).

11. A method of evaluating a printed substrate, comprising the steps of:
(a) with a print engine, imaging a small, unobtrusive L-shaped border area indicative of the print quality of the print engine on the substrate, and printing coded information within an area defined by the L-shaped border area;
(b) optically scanning the L-shaped border area to obtain electronic data; and
(c) electronically evaluating the electronic data to determine print quality and desired coded information.
